# EUROPÄISCHE PATENTSCHRIFT

(11) **EP 2 063 149 B1**
(45) Veröffentlichungstag und Bekanntmachung des Hinweises auf die Patenterteilung: **05.01.2011**
(21) Anmeldenummer: 08165899.9
(22) Anmeldetag: 06.10.2008
(51) Int. Cl.: F16F 9/04, F16F 9/48, F16F 9/512

(54) **Luftfeder**
Air spring
Ressort pneumatique

(30) Priorität: 24.11.2007 DE 102007056687
(43) Veröffentlichungstag der Anmeldung: 27.05.2009
(73) Patentinhaber: Continental Aktiengesellschaft, 30165 Hannover (DE)
(72) Erfinder: Kraus, Hans-Peter, 30826, Garbsen (DE)
(74) Vertreter: Finger, Karsten

(56) Entgegenhaltungen:
- WO-A-2005/108818
- DE-A1-102004 012 881
- DE-B3- 10 338 939

## Beschreibung

Die Erfindung betrifft eine Luftfeder mit wenigstens drei Luftfederräumen, von denen ein erster Luftfederraum durch einen elastischen Rollbalg gebildet ist, der an seinen Endseiten abdichtend festgelegt ist, und wobei ein zweiter Luftfederraum und ein dritter Luftfederraum durch ein starres Gehäuse gebildet sind, welches von einem Trennkolben unterteilt ist, welcher an einer in einer Führung axial verschieblich gelagerten Kolbenstange angeordnet ist, wobei eine axiale Verschiebung der Kolbenstange in Richtung zu dem dritten Luftfederraum ein Verkleinern des ersten Luftfederraums und des dritten Luftfederraums sowie eine Vergrößerung des zweiten Luftfederraums bewirkt, wobei im Trennkolben zumindest eine Hauptdrossel angeordnet ist, welche ein begrenztes Überströmen von Luft aus dem dritten Luftfederraum in den zweiten Luftfederraum ermöglicht, und wobei wenigstens ein sperrbarer Bypass vorgesehen ist, der in Abhängigkeit von Steuerbefehlen einen Luftfederraum mit einem anderen Luftfederraum verbindet.

Um im normalen Fahrbetrieb ein komfortables Fahrverhalten mit einem Luftfederdämpfersystem, kurz als Luftfeder bezeichnet, zu erhalten, kann es von Vorteil sein, parallel zu der Hauptdrossel eines Dämpfers eine oder mehrere Bypassdrosseln - im folgenden kurz als Bypass bezeichnet - zu installieren, welche die Dämpferkräfte gezielt reduzieren. Durch einen derartigen Bypass wird ein komfortables und weiches Fahren ermöglicht, was von weniger sportlich ausgeprägten Fahrern als angenehm empfunden wird. In anderen Fahrsituationen können sich derartige Bypässe jedoch negativ auswirken, welches insbesondere für extreme Fahrmanöver, beispielsweise bei Kurvenfahrten, gilt. Bei derartigen Fahrmanövern neigen sich mehrspurige Fahrzeuge zur Seite, während bei Motorrädern das Fahrwerk einfedert. In derartigen Situationen ist eine Schließung des Bypasses gewünscht.

Aus der WO 2005 108 818 A1 ist bereits eine gattungsgemäße Luftfeder bekannt, bei welcher eine Drosseleinrichtung in einem Verbindungskanal angeordnet ist, die bezüglich des Durchlasses verstellbar ist, um so die Federungs- und Dämpfungseigenschaften der Luftfeder variieren zu können. An sich ist eine derartige verstellbare Einrichtung von Vorteil, jedoch kann der Bypass nur durch externe elektronische Steuerbefehle verstellt, insbesondere geöffnet oder geschlossen werden, wodurch eine derartige Einrichtung relativ kompliziert aufgebaut ist.

Aus der DE 10 2004 012 881 A1 ist ein Gasfedersystem mit zentral geführten Schlauchrollbalg bekannt, welches als Gasfedersystem mit Verdränger bezeichnet wird, das sein Gasvolumen auf einfache Weise federungshubabhängig ändert. Darunter ist zu verstehen, das die Vorrichtung dazu genutzt wird, niveaulagenabhängig ein Zusatzvolumen zu- oder abzuschalten, um die Federrate der Luftfeder zu ändern. Bei der DE 10 2004 012 881 A1 ist zur Konkretisierung der Anordnung zwingend ein hydraulischer Dämpfer notwendig, was für ein Luftfedersystem als nachteilig angesehen werden kann.

Im Gegensatz zu den bislang bekannten Lösungen erscheint es als ausreichend, einen Bypass vorzusehen, der nur in bestimmten Situationen in Abhängigkeit vom Fahrwerksniveau tätig wird.

Der Erfindung liegt die Aufgabe zugrunde, eine Luftfeder zu schaffen, welche die geschilderten Nachteile beseitigt. Insbesondere soll eine Luftfeder vorgestellt werden, bei der ein Bypass niveaulagenabhängig geschlossen oder geöffnet ist.

Der Erfindung liegt die Erkenntnis zugrunde, dass sich die gestellte Aufgabe dadurch lösen lässt, dass der Bypass in Abhängigkeit von der axialen Stellung der Kolbenstange der Luftfeder geöffnet bzw. geschlossen ist, wobei der Bypass zwischen der Kolbenstange und einer als Reibhülse ausgebildeten Führung der Kolbenstange angeordnet ist.

Die Erfindung geht daher gemäß den Merkmalen des Anspruchs 1 aus von einer Luftfeder mit wenigstens drei Luftfederräumen, von denen ein erster Luftfederraum durch einen elastischen Rollbalg gebildet ist, der an seinen Endseiten abdichtend festgelegt ist, und wobei ein zweiter Luftfederraum und ein dritter Luftfederraum durch ein starres Gehäuse gebildet sind, welches von einem Trennkolben unterteilt ist, welcher an einer in einer Führung axial verschieblich gelagerten Kolbenstange angeordnet ist, wobei eine axiale Verschiebung der Kolbenstange in Richtung zu den dritten Luftfederraum ein Verkleinern des ersten Luftfederraums und des dritten Luftfederraums sowie eine Vergrößerung des zweiten Luftfederraums bewirkt, wobei im Trennkolben zumindest eine Hauptdrossel angeordnet ist, die ein begrenztes Überströmen von Luft aus dem dritten Luftfederraum in den zweiten Luftfederraum ermöglicht, und wobei wenigstens ein sperrbarer Bypass vorgesehen ist, der in Abhängigkeit von Steuerbefehlen einen Luftfederraum mit einem anderen Luftfederraum verbindet. Zudem ist erfindungsgemäß vorgesehen, dass der Bypass zwischen der Kolbenstange und einer Reibhülse der Führung angeordnet ist, wobei der Bypass in einer bestimmten axialen Position der Kolbenstange geschlossen oder offen ist.

Durch diesen Aufbau wird vorteilhaft erreicht, dass abhängig vom Federzustand die Dämpfercharakteristik automatisch verstellt wird. Denn bei dem erfindungsgemäßen niveaulagenabhängigen Bypass wird nicht das Luftfedervolumen verändert, sondern eine parallel zur eigentlichen Dämpferdrossel wirkende Bypassdrossel geschaltet, welche die Feder- und Dämpfereigenschaften des Systems niveaulagenabhängig verändert. Ein typischer Federzustand in einer Extremsituation ist bei einer Luftfeder eine starke Verschiebung der Kolbenstange in Richtung des Gehäuses. Der erfindungsgemäße Bypass ist so an der Kolbenstange bzw. an der Reibhülse angeordnet, dass der Bypass dann geschlossen ist, wenn sich die Kolbenstange in dieser extremen axialen Lage befindet. Die niveaulageabhängige Schaltung des Bypasses erfolgt also auf vergleichsweise einfache Art und Weise rein mechanisch, so dass aufwendige Steuerungs- und Sensoreinrichtungen überflüssig sind.

Außerdem kann vorgesehen sein, dass der Bypass den zweiten Luftfederraum mit dem ersten Luftfederraum verbindet.

In einer anderen vorteilhaften Weiterbildung kann vorgesehen sein, dass in den Außenmantel der Kolbenstange eine Nut eingebracht ist, durch welche der radiale Durchmesser der Kolbenstange in einem axialen Bereich verkleinert ist, wobei bei vorgegebener axialer Position der Kolbenstange ein Spalt zwischen Reibhülse und Kolbenstange vorhanden ist, welcher den ersten Luftfederraum mit dem zweiten Luftfederraum strömungstechnisch verbindet.

Eine dazu alternative Ausgestaltung der Erfindung sieht vor, dass der Bypass den zweiten Luftfederraum mit dem dritten Luftfederraum verbindet. Diese Ausgestaltung lässt sich noch dadurch ergänzen, dass der Bypass den zweiten Luftfederraum mit dem dritten Luftfederraum über eine Rohrleitung in der Kolbenstange und über einen Auslaß im Trennkolben verbindet.

In einer besonders praktischen Weiterbildung der Erfindung ist vorgesehen, dass die Reibhülse eine Bohrung aufweist, welche in eine radial innere Nut in der Reibhülse mündet, und dass die Kolbenstange eine radiale Bohrung aufweist, welche in die Rohrleitung mündet.

Sehr vorteilhaft ist ebenso eine Ausgestaltung der Erfindung, die sich dadurch auszeichnet, dass bei vorgegebener axialer Stellung der Kolbenstange Luft vom zweiten Luftfederraum über die die Bohrung und die Nut der Reibhülse in die Bohrung sowie die Rohrleitung der Kolbenstange einströmt, und durch den Auslaß des Trennkolbens in den dritten Luftfederraum gelangt.

Ebenso praktisch ist eine Weiterbildung der Erfindung, bei welcher vorgesehen ist, dass die Kolbenstange zum Öffnen oder Schließen des Bypass verdrehbar ausgebildet ist. Besonders vorteilhaft ist schließlich eine Ausgestaltung der Erfindung, die sich dadurch auszeichnet, dass die Kolbenstange mit einem Stellmotor verbunden ist.

Die Erfindung wird im Folgenden anhand der beiliegenden Zeichnung näher erläutert. Darin zeigt
Fig. 1 eine Schnittansicht durch ein erstes Ausführungsbeispiel einer Luftfeder gemäß der Erfindung, und
Fig. 2 eine Schnittansicht durch ein zweites Ausführungsbeispiel einer Luftfeder gemäß der Erfindung.

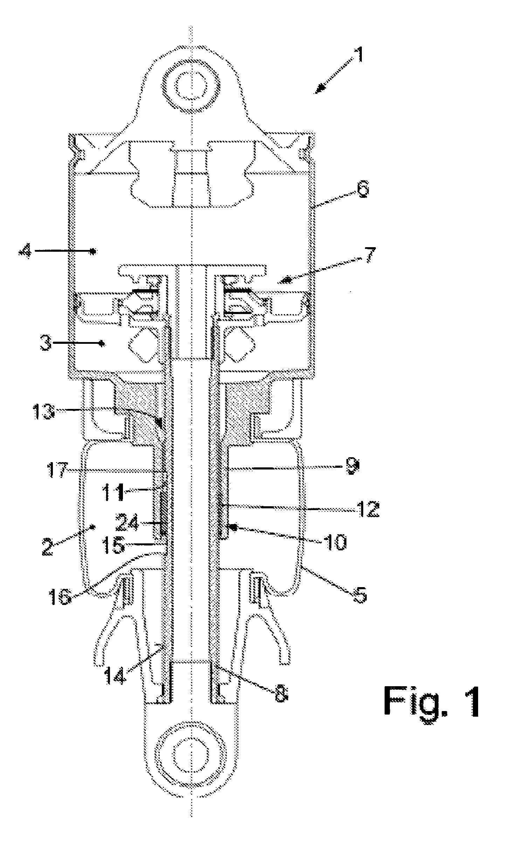

In Fig. 1 ist in einer Längsschnittsansicht ein erstes Ausführungsbeispiel einer erfindungsgemäßen Luftfeder 1 dargestellt, welche drei Luftfederräume 2, 3, 4 aufweist. Der erste Luftfederraum 2 wird durch einen elastischen Rollbalg 5 gebildet, der an seinen Endseiten abdichtend festgelegt ist. Der zweite Luftfederraum 3 und der dritte Luftfederraum 4 sind durch ein starres Gehäuse 6 begrenzt, welches von einem Trennkolben 7 unterteilt ist. Der Trennkolben 7 ist an einer verschieblich gelagerten Kolbenstange 8 angeordnet. Wird die Kolbenstange 8 beim Einfedern der Luftfeder 1 in Richtung auf den dritten Luftfederraum 4 verschoben, so verkleinern sich der erste Luftfederraum 2 und der dritte Luftfederraum 4, während der zweite Luftfederraum 3 vergrößert wird. Dementsprechend wird die in den Luftfederräumen 2, 3, 4 enthaltene Luft oder das darin vorhandene Gas komprimiert bzw. entspannt.

In dem Trennkolben 7 sind nicht näher dargestellte, jedoch an sich bekannte Drosseln als Hauptdrosseln angeordnet, die ein begrenztes Überströmen von Luft aus dem dritten Luftfederraum 4 im Falle einer Komprimierung der Luft in diesem Luftfederraum in den zweiten Luftfederraum 3 ermöglichen, und umgekehrt. Beim Ausfedern bewegt sich der Trennkolben 7 und die Kolbenstange 8 in der Darstellung gemäß Fig. 1 nach unten, so dass der zweite Luftfederraum 3 verkleinert und die darin befindliche Luft komprimiert wird. Über die Drosseln wird ein begrenztes Überströmen von Luft aus dem zweiten Luftfederraum 3 in den dritten Luftfederraum 4 ermöglicht. Die in dem Trennkolben 7 angeordneten Drosseln sind hinsichtlich ihrer Durchlassquerschnitte fest eingestellt und von außen in der Regel nicht zugänglich, ohne dass die komplette Luftfeder demontiert und zerlegt wird.

Die Kolbenstange 8 ist in einem Zylinder 9 geführt, welcher einstückig an das Gehäuse 6 angeformt ist. Eine Führung 10 der Kolbenstange 8 im Zylinder 9 ist als eine zwischen innerer Zylinderwandung 11 und Kolbenstange 8 angeordnete Reibhülse 12 ausgebildet. Die Führung 10 und die Kolbenstange 8 sind dabei so aufeinander abgestimmt, dass bei entsprechender axialer Position der Kolbenstange 8 ein Bypass 13 als Nebendrossel geöffnet oder geschlossen ist.

Um eine Öffnung bzw. eine Schließung des Bypass 13 zu erreichen, ist in den Außenmantel 14 der Kolbenstange eine Ausnehmung oder Nut 15 eingebracht, durch welche der radiale Durchmesser der Kolbenstange 8 in einem axialen Bereich verkleinert ist. Axial wird die Nut 15 durch Schultern 16, 17 begrenzt.

In der in Fig. 1 dargestellten Position der Kolbenstange 8 bzw. der Nut 15 ist der Bypass 13 offen, so dass Luft zwischen den beiden Lufträumen 2 und 3 durch den Bypass 13 strömen kann, da durch die Nut 15 ein Spalt 24 zwischen der Reibhülse 12 und der Kolbenstange 8 entsteht. Bei stärkerer Einfederung und damit axialer Verschiebung der Kolbenstange 8 in Richtung des Gehäuses 6 umschließt die Reibhülse 12 die Kolbenstange 8 im Bereich des Außenmantels 14, axial also außerhalb der Nut 15, so dass der Bypass 13 geschlossen ist.

Dieser Zustand entspricht einer Situation, welche bei extremen Fahrmanövern auftreten. In diesen Situationen ist eine Reduzierung der Dämpfkräfte durch Bypassdrosseln unerwünscht. Die erfindungsgemäße Anordnung des Bypass 13 sorgt dafür, dass niveaulagenabhängig der Bypass 13 geschlossen wird, ohne dass externe Steuerungsmechanismen eingesetzt werden müssen. Der Bypass 13 schließt bei einer bestimmten axialen Stellung der Kolbenstange 8, wobei sich die korrekte axiale Schließstellung der Kolbenstange 8 leicht ermitteln lässt.

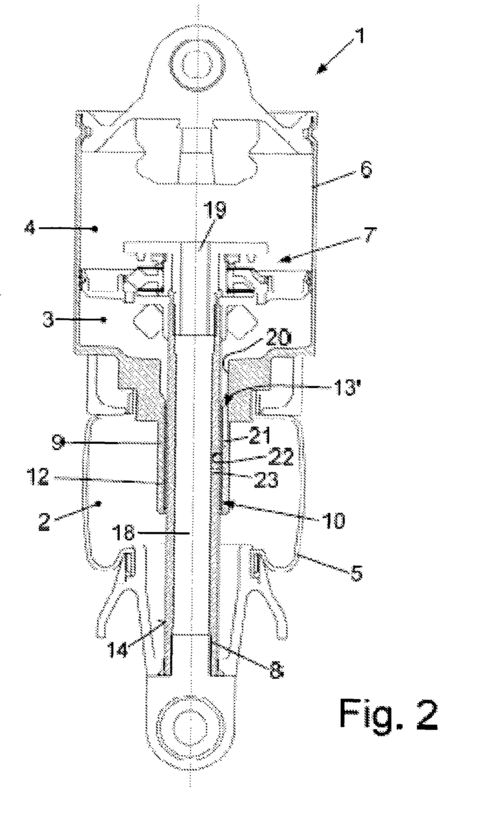

In Fig. 2 ist in einer Längsschnittsansicht ein zweites Ausführungsbeispiel einer erfindungsgemäßen Luftfeder 1 dargestellt, welche weitgehend der Luftfeder 1 aus Fig. 1 entspricht und ebenfalls drei Luftfederräume 2, 3, 4 aufweist. Der erste Luftfederraum 2 wird durch einen Rollbalg 5 gebildet, der an seinen Endseiten abdichtend festgelegt ist. Der zweite Luftfederraum 3 und der dritte Luftfederraum 4 sind durch ein Gehäuse 6 gebildet, welches von einem Trennkolben 7 unterteilt ist. Der Trennkolben 7 ist an einer verschieblich gelagerten Kolbenstange 8 angeordnet. Wird die Kolbenstange 8 beim Einfedern der Luftfeder 1 in Richtung auf den dritten Luftfederraum 4 verschoben, verkleinern sich der erste Luftfederraum 2 und der dritte Luftfederraum 4, während der zweite Luftfederraum 3 vergrößert wird. Dementsprechend wird die in den Luftfederräumen 2, 3, 4 enthaltene Luft oder das darin vorhandene Gas komprimiert bzw. entspannt.

In dem Trennkolben 7 sind ebenfalls nicht näher dargestellte, jedoch an sich bekannte Drosseln als Hauptdrosseln angeordnet, die ein begrenztes Überströmen von Luft aus dem dritten Luftfederraum 4 im Falle einer Komprimierung der Luft in diesem dritten Luftfederraum 4 in den zweiten Luftfederraum 3 ermöglichen, und umgekehrt. Beim Ausfedern bewegt sich der Trennkolben 7 und die Kolbenstange 8 in der Darstellung gemäß Fig. 1 nach unten, so dass der zweite Luftfederraum 3 verkleinert und die darin befindliche Luft komprimiert wird. Über die Drosseln wird ein begrenztes Überströmen von Luft aus dem zweiten Luftfederraum 3 in den dritten Luftfederraum 4 ermöglicht. Die in dem Trennkolben 7 angeordneten Drosseln sind auch hierbei hinsichtlich ihrer Durchlassquerschnitte fest eingestellt und von außen in der Regel nicht zugänglich, ohne dass die komplette Luftfeder demontiert und zerlegt wird.

Die Kolbenstange 8 ist auch bei diesem Ausführungsbeispiel in einem Zylinder 9 geführt, welcher einstückig an das Gehäuse 6 angeformt ist. Eine Führung 10 der Kolbenstange 8 im Zylinder 9 ist als eine zwischen der inneren Zylinderwandung 11 des Zylinders 9 und Kolbenstange 8 angeordnete Reibhülse 12 ausgebildet. Führung 10 und Kolbenstange 8 sind dabei so aufeinander abgestimmt, dass bei entsprechender axialer Position der Kolbenstange 8 ein Bypass 13' als Nebendrossel geöffnet oder geschlossen ist.

Im Gegensatz zum Bypass 13 der Fig. 1 verbindet der Bypass 13' nach Fig. 2 den Luftfederraum 3 mit dem Luftfederraum 4 über eine Rohrleitung 18 in der Kolbenstange 8 und über einen Ein- bzw. Auslaß 19 im Trennkolben 17. Bei dieser Ausgestaltung ist der Bypass 13' im Wesentlichen in die Führung 10 bzw. in die Reibhülse 12 eingearbeitet. Hierzu ist in den Zylinder 9 eine Ausnehmung 20 eingearbeitet. Die Reibhülse 12 weist einen Schlitz oder eine Bohrung 21 auf, welche in eine radial innere Nut 22 in der Reibhülse 12 mündet. Die Kolbenstange 8 weist eine radiale Bohrung 23 auf, welche in die Rohrleitung 18 mündet.

Auch bei dieser Ausgestaltung ist der Bypass 13' in Abhängigkeit von der Niveaulage, also der axialen Position der Kolbenstange 8 geöffnet oder geschlossen. In der in Fig. 2 dargestellten Stellung der Kolbenstange 8 kann Luft vom zweiten Luftfederraum 3 über die Ausnehmung 20 des Zylinders 9, die Bohrung 21 und die Nut 22 der Reibhülse 12 in die radiale Bohrung 23 sowie die Rohrleitung 18 der Kolbenstange 8 einströmen und durch den Auslaß 19 des Trennkolbens 7 in den dritten Luftfederraum 4 gelangen.

Verschiebt sich die Kolbenstange 8 dagegen bei extremen Situationen in Richtung des Gehäuses 6, so verschiebt sich auch entsprechend die Bohrung 23 der Kolbenstange 8 axial nach oben über die Nut 22 der Reibhülse hinaus, so dass dann die Reibhülse 12 an der Bohrung 23 anliegt und diese verschließt. Auch bei dieser Ausgestaltungsform wird der Bypass 13' niveaulagenabhängig geschlossen bzw. geöffnet, ohne dass externe Steuerungsmechanismen eingesetzt werden müssen. Der Bypass 13' schließt bei einer bestimmten axialen Stellung der Kolbenstange 8, wobei sich die korrekte axiale Schließstellung der Kolbenstange 8 leicht ermitteln lässt.

Ein Vorteil der Ausgestaltung gemäß Fig. 2 ist die Möglichkeit, den Bypass 13' im Bedarfsfall manuell schließen zu können. Dies kann auf einfachste Weise durch ein Verdrehen der Kolbenstange 8 erreicht werden. In diesem Fall wird die Bohrung 23 aus dem Einwirkungsbereich von Bohrung 22 und Nut 21 der Reibhülse 12 durch Verdrehen der Kolbenstange herausgebracht, wodurch der Bypass 13' in allen axialen Positionen der Kolbenstange 8 geschlossen ist. Möglich ist es aber auch, die Kolbenstange 8 mit einem elektrischen Stellmotor zu verbinden, durch welchen die Kolbenstange 8 im Fahrbetrieb je nach gewünschten Charakteristika verdreht und damit der bypass 13' geöffnet oder geschlossen werden kann.

### Bezugszeichenliste

- 1: Luftfeder
- 2: Luftfederraum
- 3: Luftfederraum
- 4: Luftfederraum
- 5: Rollbalg
- 6: Gehäuse
- 7: Trennkolben
- 8: Kolbenstange
- 9: Zylinder
- 10: Führung der Kolbenstange 8
- 11: Innere Zylinderwandung
- 12: Reibhülse
- 13: Bypass
- 13': Bypass
- 14: Außenmantel der Kolbenstange 8
- 15: Nut
- 16: Schulter
- 17: Schulter
- 18: Rohrleitung
- 19: Auslaß
- 20: Ausnehmung
- 21: Bohrung
- 22: Nut
- 23: Bohrung
- 24: Spalt

## Patentansprüche

1. Luftfeder (1) mit wenigstens drei Luftfederräumen (2, 3, 4), von denen ein erster Luftfederraum (2) durch einen elastischen Rollbalg (5) gebildet ist, der an seinen Endseiten abdichtend festgelegt ist, und wobei ein zweiter Luftfederraum (3) und ein dritter Luftfederraum (4) durch ein starres Gehäuse (6) gebildet sind, welches von einem Trennkolben (7) unterteilt ist, welcher an einer in einer Führung (10) axial verschieblich gelagerten Kolbenstange (8) angeordnet ist, wobei eine axiale Verschiebung der Kolbenstange (8) in Richtung zu den dritten Luftfederraum (4) ein Verkleinern des ersten Luftfederraums (2) und des dritten Luftfederraums (4) sowie eine Vergrößerung des zweiten Luftfederraums (3) bewirkt, wobei im Trennkolben (7) zumindest eine Hauptdrossel angeordnet ist, welche ein begrenztes Überströmen von Luft aus dem dritten Luftfederraum (4) in den zweiten Luftfederraum (3) ermöglicht, und wobei wenigstens ein sperrbarer Bypass (13; 13') vorgesehen ist, der in Abhängigkeit von Steuerbefehlen einen Luftfederraum (2; 3; 4) mit einem anderen Luftfederraum (2; 3; 4) verbindet, **dadurch gekennzeichnet, dass** der Bypass (13; 13') zwischen der Kolbenstange (8) und einer Reibhülse (12) der Führung (10) angeordnet ist, wobei der Bypass (13; 13') in einer bestimmten axialen Position der Kolbenstange (8) geschlossen oder offen ist.

2. Luftfeder nach Anspruch 1, **dadurch gekennzeichnet, dass** der Bypass (13) den zweiten Luftfederraum (3) mit dem ersten Luftfederraum (2) verbindet.

3. Luftfeder nach Anspruch 2, **dadurch gekennzeichnet, dass** in den Außenmantel (14) der Kolbenstange eine Nut (15) eingebracht ist, durch welche der radiale Durchmesser der Kolbenstange (8) in einem axialen Bereich verkleinert ist, wobei bei vorgegebener axialer Position der Kolbenstange (8) ein Spalt (18) zwischen der Reibhülse (12) und der Kolbenstange (8) vorhanden ist, welcher den ersten Luftfederraum (2) mit dem zweiten Luftfederraum (3) strömungstechnisch verbindet.

4. Luftfeder nach Anspruch 1, **dadurch gekennzeichnet, dass** der Bypass (13') den zweiten Luftfederraums (3) mit dem dritten Luftfederraum (4) verbindet.

5. Luftfeder nach Anspruch 4, **dadurch gekennzeichnet, dass** der Bypass (13') den zweiten Luftfederraum (3) mit dem dritten Luftfederraum (4) über eine Rohrleitung (18) in der Kolbenstange (8) und über einen Auslaß (19) im Trennkolben (17) verbindet.

6. Luftfeder nach Anspruch 5, **dadurch gekennzeichnet, dass** die Reibhülse (12) eine Bohrung (21) aufweist, welche in eine radial innere Nut (22) in der Reibhülse (12) mündet, und dass die Kolbenstange (8) eine radiale Bohrung (23) aufweist, welche in die Rohrleitung (18) mündet.

7. Luftfeder nach Anspruch 6, **dadurch gekennzeichnet, dass** bei vorgegebener axialer Stellung der Kolbenstange (8) Luft vom zweiten Luftfederraum (3) über die Bohrung (21) und die Nut (22) der Reibhülse (12) in die Bohrung (23) sowie die Rohrleitung (18) der Kolbenstange (8) einströmt und durch den Auslaß (19) des Trennkolbens (7) in den dritten Luftfederraum (4) gelangt.

8. Luftfeder wenigstens nach Anspruch 4, **dadurch gekennzeichnet, dass** die Kolbenstange (8) zum Öffnen oder Schließen des Bypass (13') verdrehbar ausgebildet ist.

9. Luftfeder nach Anspruch 8, **dadurch gekennzeichnet, dass** die Kolbenstange (8) mit einem Stellmotor verbunden ist.

## Claims

1. Air spring (1) having at least three air-spring chambers (2, 3, 4), of which a first air-spring chamber (2) is formed by an elastic rolling bellows (5) which is fixed sealingly on its end sides, a second air-spring chamber (3) and a third air-spring chamber (4) being formed by a rigid housing (6) which is divided by a separating piston (7) which is arranged on a piston rod (8) which is mounted axially displaceably in a guide (10), an axial displacement of the piston rod (8) in the direction of the third air-spring chamber (4) bringing about a reduction of the first air-spring chamber (2) and the third air-spring chamber (4) and an enlargement of the second air-spring chamber (3), at least one main throttle being arranged in the separating piston (7), which main throttle makes limited crossflow of air possible out of the third air-spring chamber (4) into the second air-spring chamber (3), and at least one bypass (13; 13') being provided which can be shut off and connects one air-spring chamber (2; 3; 4) to another air-spring chamber (2; 3; 4) as a function of control commands, **characterized in that** the bypass (13; 13') is arranged between the piston rod (8) and a friction sleeve (12) of the guide (10), the bypass (13; 13') being closed or open in a defined axial position of the piston rod (8).

2. Air spring according to Claim 1, **characterized in that** the bypass (13) connects the second air-spring chamber (3) to the first air-spring chamber (2).

3. Air spring according to Claim 2, **characterized in that** a groove (15) is made in the outer shell (14) of the piston rod, by way of which groove (15) the radial diameter of the piston rod (8) is reduced in an axial region, there being a gap (18) between the friction sleeve (12) and the piston rod (8) in the case of a predefined axial position of the piston rod (8), which gap (18) connects the first air-spring chamber (2) to the second air-spring chamber (3) in terms of flow.

4. Air spring according to Claim 1, **characterized in that** the bypass (13') connects the second air-spring chamber (3) to the third air-spring chamber (4).

5. Air spring according to Claim 4, **characterized in that** the bypass (13') connects the second air-spring chamber (3) to the third air-spring chamber (4) via a pipeline (18) in the piston rod (8) and via an outlet (19) in the separating piston (17).

6. Air spring according to Claim 5, **characterized in that** the friction sleeve (12) has a hole (21) which opens into a radially inner groove (22) in the friction sleeve (12), and **in that** the piston rod (8) has a radial hole (23) which opens into the pipeline (18).

7. Air spring according to Claim 6, **characterized in that**, in the case of a predefined axial position of the piston rod (8), air flows from the second air-spring chamber (3) via the hole (21) and the groove (22) of the friction sleeve (12) into the hole (23) and the pipeline (18) of the piston rod (8) and passes into the third air-spring chamber (4) through the outlet (19) of the separating piston (7).

8. Air spring at least according to Claim 4, **characterized in that** the piston rod (8) is of rotatable configuration for opening or closing the bypass (13').

9. Air spring according to Claim 8, **characterized in that** the piston rod (8) is connected to an actuating motor.

## Revendications

1. Ressort pneumatique (1) comprenant au moins trois espaces de ressort pneumatique (2, 3, 4), dont un premier espace de ressort pneumatique (2) est formé par un soufflet roulant élastique (5), qui est fixé de manière hermétique sur ses côtés d'extrémité, un deuxième espace de ressort pneumatique (3) et un troisième espace de ressort pneumatique (4) étant formés par un boîtier rigide (6), qui est divisé par un piston de séparation (7), qui est disposé sur une tige de piston (8) montée de manière déplaçable axialement dans un guide (10), un déplacement axial de la tige de piston (8) dans la direction du troisième espace de ressort pneumatique (4) provoquant une réduction du premier espace de ressort pneumatique (2) et du troisième espace de ressort pneumatique (4) ainsi qu'une augmentation du deuxième espace de ressort pneumatique (3), au moins un étranglement principal étant disposé dans le piston de séparation (7), lequel permet un débordement limité d'air hors du troisième espace de ressort pneumatique (4) dans le deuxième espace de ressort pneumatique (3), et au moins une dérivation pouvant être bloquée (13 ; 13') étant prévue, laquelle relie un espace de ressort pneumatique (2 ; 3 ; 4) à un autre espace de ressort pneumatique (2 ; 3 ; 4) en fonction d'ordres de commande, **caractérisé en ce que** la dérivation (13, 13') est disposée entre la tige de piston (8) et une douille de friction (12) de guide (10), la dérivation (13 ; 13') étant fermée ou ouverte dans une position axiale déterminée de la tige de piston (8).

2. Ressort pneumatique selon la revendication 1, **caractérisé en ce que** la dérivation (13) relie le deuxième espace de ressort pneumatique (3) au premier espace de ressort pneumatique (2).

3. Ressort pneumatique selon la revendication 2, **caractérisé en ce qu'**une rainure (15) est pratiquée dans l'enveloppe extérieure (14) de la tige de piston, celle-ci permettant de réduire le diamètre radial de la tige de piston (8) dans une région axiale, une fente (18) entre la douille de friction (12) et la tige de piston (8) étant prévue dans la position axiale prédéfinie de la tige de piston (8), laquelle fente relie le premier espace de ressort pneumatique (2) au deuxième espace de ressort pneumatique (3) par une technique d'écoulement.

4. Ressort pneumatique selon la revendication 1, **caractérisé en ce que** la dérivation (13') relie le deuxième espace de ressort pneumatique (3) au troisième espace de ressort pneumatique (4).

5. Ressort pneumatique selon la revendication 4, **caractérisé en ce que** la dérivation (13') relie le deuxième espace de ressort pneumatique (3) au troisième espace de ressort pneumatique (4) par le biais d'une conduite tubulaire (18) dans la tige de piston (8) et par le biais d'une sortie (19) dans le piston de séparation (7).

6. Ressort pneumatique selon la revendication 5, **caractérisé en ce que** la douille de friction (12) présente un alésage (21) qui débouche dans une rainure radialement interne (22) dans la douille de friction (12), et **en ce que** la tige de piston (8) présente un alésage radial (23) qui débouche dans la conduite tubulaire (18).

7. Ressort pneumatique selon la revendication 6, **caractérisé en ce que** dans une position axiale prédéfinie de la tige de piston (8), de l'air afflue depuis le deuxième espace de ressort pneumatique (3) par le biais de l'alésage (21) et de la rainure (22) de la douille de friction (12) dans l'alésage (23) ainsi que dans la conduite tubulaire (18) de la tige de piston (8) et parvient par la sortie (19) du piston de séparation (7), dans le troisième espace de ressort pneumatique (4).

8. Ressort pneumatique selon au moins la revendication 4, **caractérisé en ce que** la tige de piston (8) est réalisée de manière à pouvoir tourner en vue d'ouvrir ou de fermer la dérivation (13').

9. Ressort pneumatique selon la revendication 8, **caractérisé en ce que** la tige de piston (8) est reliée à un moteur de réglage.
